# EUROPEAN PATENT APPLICATION

(11) **EP 4 129 068 A1**
(43) Date of publication of application: **08.02.2023**
(21) Application number: 21776973.6
(22) Date of filing: 23.03.2021
(51) Int. Cl.: A01N 59/16, A01K 61/60, A01K 63/00, A01K 75/00, A01N 25/10, A01P 13/00, B32B 9/00, C09D 5/14, C09D 5/16, C09D 7/61, C09D 201/00

(54) **ANTI-ALGAL AGENT**

(30) Priority: 24.03.2020 JP 2020052661
(71) Applicant: Kyodo Printing Co., Ltd., Tokyo 112-8501 (JP)
(72) Inventor: TERADA, Akira, Tokyo 112-8501 (JP); KOBAYASHI, Fumihito, Tokyo 112-8501 (JP); KARINO, Masahiro, Tokyo 112-8501 (JP); YAMADA, Atsushi, Yokkaichi-shi, Mie 512-0934 (JP)
(74) Representative: Ricker, Mathias
(86) International application number: PCT/JP2021/012018
(87) International publication number: WO 2021/193644

(57) **Abstract**

An anti-algal agent is represented by the following composition formula (1): Ln₂ₓFe₂₍₁₋ₓ₎O₃. (In formula (1), Ln is a rare earth element selected from lanthanum, praseodymium, neodymium and yttrium; and x is a number of 0.55 or more and less than 1.00.)

## Description

### FIELD

The present invention relates to an anti-algal agent.

### BACKGROUND

Anti-algal agents are used to prevent the generation of algae on ships, seawalls, building materials, and fishing nets.

Organotin compounds, cuprous oxide, and quaternary amine compounds have been conventionally known as anti-algal agents which exhibit excellent anti-algal effects. However, these anti-algal agents are avoided from the viewpoint of environmental contamination.

In recent years, ferrite compounds have been proposed as anti-algal agents having low environmental contamination and excellent safety. For example, Patent Literature 1 discloses an anti-algal additive primarily composed of an orthoferrite containing a rare earth element selected from La, Pr, Nd, and Y, iron, and oxygen, an anti-algal paint using this additive, and an anti-algal product in which a substrate surface is coated with this paint. Patent Literature 1 considers the anti-algal effect in association with the magnetism of the material, and describes that an orthoferrite having a rare earth oxide:Fe₂O₃ ratio of 1:1 (molar ratio), which has a small coercive force and exhibits a magnetic force close to the intrinsic magnetic field of plants, is most preferable as an anti-algal additive.

### [CITATION LIST]

### [PATENT LITERATURE]

[PTL 1] Japanese Unexamined Patent Publication (Kokai) No. 2005-272320

### SUMMARY

### [TECHNICAL PROBLEM]

The anti-algal product obtained using the technology of Patent Literature 1 exhibits a degree of anti-algal effect immediately after production. However, the effect is not sufficient, and the anti-algal effect decreases with the passage of time, whereby the anti-algal effect does not last for long periods of time.

The present invention has been conceived in light of the circumstances described above, and an object thereof is to provide an anti-algal agent which has an excellent anti-algal effect and a long-lasting anti-algal effect.

### [SOLUTION TO PROBLEM]

The present invention is as described below.

«Aspect 1» An anti-algal agent represented by the following composition formula (1):

Ln₂ₓFe₂₍₁₋ₓ₎O₃ (1)

where Ln is a rare earth element selected from lanthanum, praseodymium, neodymium, and yttrium, and x is a number of 0.55 or more and less than 1.00.

<<Aspect 2>> The anti-algal agent according to Aspect 1, wherein x in formula (1) is a number of 0.55 or more and 0.85 or less.

«Aspect 3» The anti-algal agent according to Aspect 2, wherein x in formula (1) is a number of 0.55 or more and 0.75 or less.

«Aspect 4» The anti-algal agent according to any one of Aspects 1 to 3, wherein Ln in formula (1) is lanthanum.

«Aspect 5» An anti-algal product, comprising a substrate and an anti-algal layer on the substrate, wherein
the anti-algal layer is a layer containing the anti-algal agent according to any one of Aspects 1 to 4.

«Aspect 6» The anti-algal product according to Aspect 5, wherein the anti-algal layer further contains a resin.

«Aspect 7» The anti-algal product according to Aspect 5 or 6, selected from a ship, a seawall, a building material, a fishing net, an aquaculture net, a water tank, a pool, a pool course rope, a buoy, and a tile.

«Aspect 8» An anti-algal paint, comprising the anti-algal agent according to any one of Aspects 1 to 4.

«Aspect 9» The anti-algal paint according to Aspect 8, further comprising a resin and a solvent.

### [ADVANTAGEOUS EFFECTS OF INVENTION]

According to the present invention, there is provided an anti-algal agent which has an excellent anti-algal effect and a long-lasting anti-algal effect.

### DESCRIPTION OF EMBODIMENTS

### <<Anti-Algal Agent>>

The anti-algal agent of the present application is represented by the following composition formula (1):

Ln₂ₓFe₂₍₁₋ₓ₎O₃ (1)

where Ln is a rare earth element selected from lanthanum, praseodymium, neodymium, and yttrium, and x is a number of 0.55 or more and less than 1.00.

The present inventors have investigated in detail the compositions of rare earth ferrites and the anti-algal effects thereof. As a result, the inventors have found that by setting the Ln:Fe ratio of a rare earth ferrite to a region richer in the rare earth element than 1: 1 (molar ratio), the anti-algal effect is improved and the period during which the effect continues is extended, leading to the present invention.

The anti-algal agent of the present invention may be of any type as long as x in composition formula (1) described above is 0.55 or more and less than 1.00. For example, the anti-algal agent may be formed, as a whole, of a solid solution with a uniform composition, a mixture of an LnFeO₃ phase and an Ln₂O₃ phase, or a mixture of a solid solution of uniform composition with an LnFeO₃ phase and an Ln₂O₃ phase, or may contain another phase.
x in composition formula (1) may be 0.56 or more, 0.57 or more, 0.58 or more, 0.59 or more, or 0.60 or more, and may be 0.95 or less, 0.90 or less, 0.85 or less, 0.80 or less, 0.75 or less, 0.70 or less, 0.65 or less, or 0.60 or less. x in composition formula (1) may typically be, for example, 0.55 or more and 0.75 or less.

From the viewpoint of algal resistance and cost, in particular, Ln in composition formula (1) may be lanthanum, and thus, the anti-algal agent of the present invention may be lanthanum ferrite.

The anti-algal agent of the present invention may be produced by imparting suitable stress to a mixture containing a rare earth source and an iron source in a predetermined ratio, pulverizing and mixing the mixture, and then firing the mixture. The imparted stress may be, for example, a frictional force, shear force, shear stress, or impact force. Such stress may be applied to the mixture of the rare earth source and the iron source by, for example, wet grinding with a ball mill.

As the rare earth source, for example, an oxide of the desired rare earth element may be used, and bastnaesite, monazite, and xenotime may also be used.

As the iron source, oxides such as FeO, Fe₃O₄, and Fe₂O₃; oxyoxides such as FeOOH, ferrihydrite, and Schwertmannite; and hydroxides such as Fe(OH)₂ and Fe(OH)₃ may be used.

When wet grinding is used to grind and mix the mixture of the rare earth source and the iron source, for example, water or alcohol may be used as the liquid medium.

After pulverizing and mixing the mixture of the rare earth source and the iron source, the mixture is fired after removing the liquid medium by an appropriate method such as drying by heating as needed. This firing may be carried out at a temperature of, for example, 400 °C or higher, 500 °C or higher, 600 °C or higher, 700 °C or higher, 800 °C or higher, 900 °C or higher, or 1,000 °C or higher and, for example, 1,500 °C or lower, 1,400 °C or lower, 1,300 °C or lower, 1,200 °C or lower, 1,100 °C or lower, or 1,000 °C or lower for a time of 1 hour or more, 2 hours or more, 3 hours or more, 4 hours or more, 6 hours or more, 8 hours or more, 12 hours or more, or 15 hours or more, and 72 hours or less, 48 hours or less, 36 hours or less, 24 hours or less, 18 hours or less, or 15 hours or less.

The ambient atmosphere during firing may be an oxidizing atmosphere, and, for example, firing may be carried out in air.

After firing, the anti-algal agent of the present invention can be obtained by pulverizing and classifying by appropriate methods as necessary.

### <<Anti-Algal Paint>>

According to another aspect of the present invention, there is provided an anti-algal paint comprising the anti-algal agent described above. This anti-algal paint may contain a resin and a solvent in addition to the anti-algal agent of the present invention.

The resin contained in the anti-algal paint of the present invention may be, for example, an acrylic resin, acrylic silicone resin, silicone resin, amino alkyd resin, epoxy resin, phenolic resin, polyurethane resin, unsaturated polyester resin, or fluorine resin.

The solvent contained in the anti-algal paint of the present invention may be selected from, for example, water, alcohols, ketones, aliphatic hydrocarbons, aromatic hydrocarbons, and esters.

From the viewpoint of exhibiting high anti-algal performance, as a ratio of the anti-algal agent to the total of the resin and the anti-algal agent in the paint, the content of the anti-algal agent in the anti-algal paint of the present invention is, for example, 1% by mass or more, preferably 2% by mass or more, more preferably 5% by mass or more, further preferably 10% by mass or more, particularly preferably 20% by mass or more, and most preferably 30% by mass or more, and from the viewpoint of obtaining suitable applicability, is, for example, 80% by mass or less, preferably 70% by mass or less, more preferably 60% by mass or less, further preferably 50% by mass or less, particularly preferably 30% by mass or less, and most preferably 20% by mass or less or 15% by mass or less.

The anti-algal paint of the present invention may be prepared, for example, by mixing a commercially available synthetic resin paint and the anti-algal agent of the present invention at a predetermined ratio.

The anti-algal paint of the present invention can be used to form an anti-algal layer on an anti-algal product, which is described later, and for example, may be used as a joint material (a filling material for gaps in tiles, concrete, and bricks), a sealant, a caulk, or an adhesive.

### <<Anti-Algal Product>>

Yet another aspect of the present invention provides:
an anti-algal product, comprising a substrate and an anti-algal layer on the substrate, wherein
the anti-algal layer is a layer containing the anti-algal agent of the present invention.

The substrate of the anti-algal product of the present invention may be any article to which algae resistance should be imparted.

The anti-algal layer of the anti-algal product of the present invention may be a cured product of the anti-algal paint described above. Thus, the anti-algal layer of the anti-algal product of the present invention may contain a resin derived from the anti-algal paint in addition to the anti-algal agent of the present invention.

The thickness of the anti-algal layer may be, for example, approximately 1 µm or more and 1 mm or less.

The coating amount of the anti-algal layer, as a dry mass per unit area after solvent removal, is, for example, 5 g/m² or more, 10 g/m² or more, 15 g/m² or more, 20 g/m² or more, or 25 g/m² or more, and may be, for example 200 g/m² or less, 150 g/m² or less, 120 g/m² or less, 100 g/m² or less, 80 g/m² or less, or 70 g/m² or less.

The anti-algal product of the present invention may be produced, for example, by applying the anti-algal paint of the present invention to an article to be provided with anti-algal properties. A suitable primer may be applied to the article prior to application of the anti-algal paint. The coating film formed by applying the anti-algal paint to the article may be heated as necessary to remove the solvent and cure the resin.

The anti-algal product of the present invention may be, for example, a ship, seawall, building material, fishing net, aquaculture net, water tank, pool wall, pool bottom, pool course rope, buoy, or tile.

### EXAMPLES

### «Example 1»

### (1) Synthesis of Lanthanum Ferrite

0.3 parts by mol of La₂O₃, 0.4 parts by mol of FeOOH and water were charged in a ball mill using 10 mmΦ alumina balls as grinding media, and pulverized and mixed for 5 hours. The resulting pulverized material was dried at 300 °C for 15 hours and then pulverized with a rotary pulverizer. The obtained pulverized product was dried at 1,000 °C for 15 hours and then pulverized with a hammer mill to obtain lanthanum ferrite (composition formula La_{1.2}Fe_{0.8}O₃) having a La:Fe ratio of 60:40 (molar ratio).

### (2) Preparation of Anti-Algal Coating Solution

The obtained lanthanum ferrite was blended into a commercially available synthetic resin paint (for concrete ponds, containing vinyl chloride resin), and mixed by shaking with a paint shaker to prepare an anti-algal coating solution. The composition of this anti-algal coating solution was adjusted so that the compounding amount of lanthanum ferrite was 10% by mass with respect to 90 parts by mass of the resin contained in the synthetic resin paint.

### (3) Production of Anti-Algal Product

Using a polyethylene terephthalate (PET) film (thickness: 50 µm) as a substrate, the anti-algal coating solution described above was applied to one side of the film using a wire bar #32 and thereafter dried at 60 °C for 2 days (48 hours) to produce an anti-algal product having an anti-algal layer on one side of the PET film. The coating weight of the anti-algal layer was 36.8 g/m².

### (4) Evaluation of Anti-Algal Product

An evaluation sample obtained by cutting the obtained anti-algal product into a 5 cm ×5 cm square was hung with a string in a rectangular parallelepiped water tank having a base area of 25 cm × 20 cm. Seawater collected from the sea was poured into this water tank to a depth of 10 cm, and the evaluation sample was completely submerged in the seawater. The water tank was allowed to stand in this state outdoors in an environment exposed to sunlight, the state of algae adherence to the coated surface was visually examined at predetermined intervals and evaluated in accordance with the following criteria. The evaluation results are shown in Table 1.

When no algae adhered to the coated surface: "-"

When the algae adhesion area was 10% or less of the area of the coated surface: "+"

When the algae adhesion area was greater than 10% and 50% or less of the area of the coated surface: "++"

When the algae adhesion area exceeded 50% of the coated surface area: "+++"

### «Example 2»

Lanthanum ferrite (La_{1.6}Fe_{0.4}O₃) having an La:Fe ratio of 80:20 (molar ratio) was synthesized in the same manner as Example 1 except that the charge amounts of La₂O₃ and FeOOH were 0.4 parts by mol and 0.2 parts by mol, respectively, and using this, an anti-algal coating solution was produced, and an anti-algal product was produced. The obtained anti-algal product was evaluated in the same manner as Example 1. The evaluation results are shown in Table 1.

### <<Comparative Example 1>>

The anti-algal product was evaluated in the same manner as Example 1, except that a PET film which was not coated with the anti-algal coating solution was cut into a 5 cm × 5 cm square and used as the evaluation sample. The evaluation results are shown in Table 1.

### <<Comparative Example 2>>

An evaluation sample was prepared and evaluated in the same manner as Example 1, except that lanthanum ferrite was not added to the coating solution. The evaluation results are shown in Table 1.

### <<Comparative Examples 3 to 5>>

Lanthanum ferrites having different La:Fe ratios were synthesized in the same manner as Example 1, except that the charge amounts of La₂O₃ and FeOOH were changed as shown in Table 1, and using these, anti-algal coating solutions were prepared, and anti-algal products were prepared. The obtained anti-algal products were evaluated in the same manner as Example 1. The evaluation results are shown in Table 1.

**[Table 1]**

| | Coating solution composition | | | | Anti-algal layer coating amount (g/m²) | Anti-algal product evaluation results (algae adhesion state) | | | |
|---|---|---|---|---|---|---|---|---|---|
| | Lanthanum ferrite | | | Resin | | | | | |
| | Comp Ratio (La : Fe) | | Compounding Amt | Compounding Amt | | After one week | After two weeks | After four weeks | After eight weeks |
| | La | Fe | (wt%) | (wt%) | | | | | |
| Ex 1 | 60 | 40 | 10 | 90 | 36.8 | - | - | - | - |
| Ex 2 | 80 | 20 | 10 | 90 | 37.7 | - | - | - | - |
| Comp Ex 1 | - | - | - | - | - | - | + | +++ | +++ |
| Comp Ex 2 | - | - | - | 100 | - | - | + | +++ | +++ |
| Comp Ex 3 | 46 | 54 | 10 | 90 | 37.5 | - | - | + | ++ |
| Comp Ex 4 | 48 | 52 | 10 | 90 | 36.1 | - | - | - | + |
| Comp Ex 5 | 50 | 50 | 10 | 90 | 37.3 | - | - | - | + |

From the results of Table 1, it was confirmed that in Comparative Examples 3 to 5 and Example 1, in which a lanthanum ferrite was used, an anti-algal effect was exhibited as compared to Comparative Examples 1 and 2, in which a lanthanum ferrite was not used. However, in anti-algal products using lanthanum ferrite having a La:Fe ratio of 50:50 (molar ratio) or a lower La ratio, the anti-algal effect could not be maintained for long period of times (Comparative Examples 3 to 5).

Conversely, in the anti-algal product of Example 1, which had a La:Fe ratio of 60:40 (molar ratio), and Example 2, which had a La:Fe ratio of 80:20 (molar ratio), no algae was found on the coated surface even after 8 weeks, confirming an excellent anti-algal effect.

### «Examples 3 to 5 and Comparative Examples 6 to 12»

Lanthanum ferrites having different La:Fe ratios were synthesized in the same manner as Example 1, except that the charge amounts of La₂O₃ and FeOOH were changed as shown in Table 2. Using the obtained lanthanum ferrites, anti-algal coating solutions were prepared in the same manner as Example 1, except that the mixing amounts of the lanthanum ferrite and resin were changed as shown in Table 2, and using these, anti-algal products were prepared. The obtained anti-algal products were evaluated in the same manner as Example 1. The evaluation results are shown in Table 2 along with the results of Examples 1 and 2 and Comparative Examples 1 to 5.

**[Table 2]**

| | Coating solution composition | | | | Anti-algal layer coating amount (g/m²) | Anti-algal product evaluation results (algae adhesion state) | | | |
|---|---|---|---|---|---|---|---|---|---|
| | Lanthanum ferrite | | | Resin | | | | | |
| | Comp Ratio (La : Fe) | | Compounding Amt (wt%) | Compounding Amt (wt%) | | After one week | After two weeks | After four weeks | After eight weeks |
| | La | Fe | | | | | | | |
| Comp Ex 1 | - | - | - | - | - | - | + | +++ | +++ |
| Comp Ex 2 | - | - | - | 100 | - | - | + | +++ | +++ |
| Comp Ex 6 | 42 | 58 | 2 | 98 | 29.5 | - | + | +++ | +++ |
| Comp Ex 7 | 46 | 54 | 2 | 98 | 31.3 | - | - | ++ | +++ |
| Comp Ex 3 | 46 | 54 | 10 | 90 | 37.5 | - | - | + | ++ |
| Comp Ex 8 | 46 | 54 | 50 | 50 | 55.8 | - | - | - | ++ |
| Comp Ex 9 | 48 | 52 | 2 | 98 | 31.1 | - | - | - | + |
| Comp Ex 4 | 48 | 52 | 10 | 90 | 36.1 | - | - | - | + |
| Comp Ex 10 | 48 | 52 | 50 | 50 | 56.4 | - | - | - | + |
| Comp Ex 11 | 50 | 50 | 2 | 98 | 30.3 | - | - | - | + |
| Comp Ex 5 | 50 | 50 | 10 | 90 | 37.3 | - | - | - | + |
| Comp Ex 12 | 50 | 50 | 50 | 50 | 57.2 | - | - | - | + |
| Ex 3 | 60 | 40 | 2 | 98 | 30.8 | - | - | - | + |
| Ex 1 | 60 | 40 | 10 | 90 | 36.8 | - | - | - | - |
| Ex 4 | 60 | 40 | 50 | 50 | 56.2 | - | - | - | - |
| Ex 2 | 80 | 20 | 10 | 90 | 37.7 | - | - | - | - |
| Ex 5 | 80 | 20 | 50 | 50 | 58.6 | - | - | - | - |

According to Table 2, it can be understood that in the anti-algal product of Comparative Example 6, in which the La:Fe ratio was 42:58 (molar ratio), an anti-algal effect was not exhibited, in the same manner as Comparative Examples 1 and 2, in which lanthanum ferrite was not used. In the anti-algal products of Comparative Examples 3, 7, and 8, in which the La:Fe ratio was 46:54 (molar ratio), though a slight anti-algal effect was exhibited, the effect thereof was low.

Conversely, the anti-algal products of Comparative Examples 5, 11, and 12, in which the La:Fe ratio was 50:50 (molar ratio), exhibited a certain degree of anti-algal effect. However, at this La:Fe ratio, even if the compounding amount of lanthanum ferrite was increased, the anti-algal maintenance period of the anti-algal product was not extended.

However, in the anti-algal products of Examples 1, 3, and 4, in which the La:Fe ratio was 60:40 (molar ratio), an excellent anti-algal effect was exhibited. Even in the case of Example 2, in which the amount of lanthanum ferrite contained in the coating solution was 2% by mass, it was confirmed that an excellent anti-algal effect was exhibited as compared to Comparative Examples 1 and 2, in which lanthanum ferrite was not used. By comparing Examples 1 and 4 with Example 3, it can be understood that the anti-algal maintenance period of an anti-algal product can be extended by increasing the amount of lanthanum ferrite.

Likewise, it was confirmed that the anti-algal products of Examples 2 and 5, in which the La:Fe ratio was 80:20 (molar ratio), exhibited an excellent anti-algal effect.

From the above results, it was confirmed that the anti-algal agent composed of the predetermined lanthanum ferrite of the present invention exhibits an excellent anti-algal effect even when used in a small amount, and the period during which the anti-algal effect is maintained can be extended by increasing the amount of lanthanum ferrite.

## Claims

1. An anti-algal agent represented by the following composition formula (1):
Ln₂ₓFe₂₍₁₋ₓ₎O₃ (1)
where Ln is a rare earth element selected from lanthanum, praseodymium, neodymium, and yttrium, and x is a number of 0.55 or more and less than 1.00.

2. The anti-algal agent according to claim 1, wherein x in formula (1) is a number of 0.55 or more and 0.85 or less.

3. The anti-algal agent according to claim 2, wherein x in formula (1) is a number of 0.55 or more and 0.75 or less.

4. The anti-algal agent according to any one of claims 1 to 3, wherein Ln in formula (1) is lanthanum.

5. An anti-algal product, comprising a substrate and an anti-algal layer on the substrate, wherein
the anti-algal layer is a layer containing the anti-algal agent according to any one of claims 1 to 4.

6. The anti-algal product according to claim 5, wherein the anti-algal layer further contains a resin.

7. The anti-algal product according to claim 5 or 6, selected from a ship, a seawall, a building material, a fishing net, an aquaculture net, a water tank, a pool, a pool course rope, a buoy, and a tile.

8. An anti-algal paint, comprising the anti-algal agent according to any one of claims 1 to 4.

9. The anti-algal paint according to claim 8, further comprising a resin and a solvent.
